# EUROPEAN PATENT SPECIFICATION

(11) **EP 0 539 182 B1**
(45) Date of publication and mention of the grant of the patent: **16.04.1997**
(21) Application number: 92309624.2
(22) Date of filing: 21.10.1992
(51) Int. Cl.: B29C 70/48

(54) **Process for producing fibre-reinforced resin mouldings**
Verfahren zur Herstellung von faserverstärkten Kunstharzformkörpern
Procédé pour la fabrication d'articles moulés à partir de résines renforcées par des fibres

(30) Priority: 25.10.1991 JP 306628/91
(43) Date of publication of application: 28.04.1993
(73) Proprietor: Mitsubishi Chemical Corporation, Chiyoda-ku Tokyo (JP)
(72) Inventor: Imanara, Tohru, Atsugi-shi, Kanagawa-ken (JP); Satou, Shoichi, Sagamihara-shi, Kanagawa-ken (JP); Yamashita, Naomi, Machida-shi, Tokyo (JP)
(74) Representative: Barlow, Roy James

(56) References cited:
- EP-A- 0 294 768
- EP-A- 0 320 302
- K. van harten : Collegedictaat Vezelversterkte Kunststoffen i49b, july 1988, Technische Universiteit Delft, faculteit der Werktuigbouwkunde, Vakgroep Vezeltechniek, Delft, NL, pages 151-155, figures 33-55.

## Description

The present invention relates to a process for producing fibre-reinforced resin mouldings and, more particularly, to a process for producing fibre-reinforced resin mouldings having few cells by structural reaction injection moulding (SRIM).

SRIM is a technique for producing fibre-reinforced resin mouldings according to the reaction injection moulding (RIM) method.

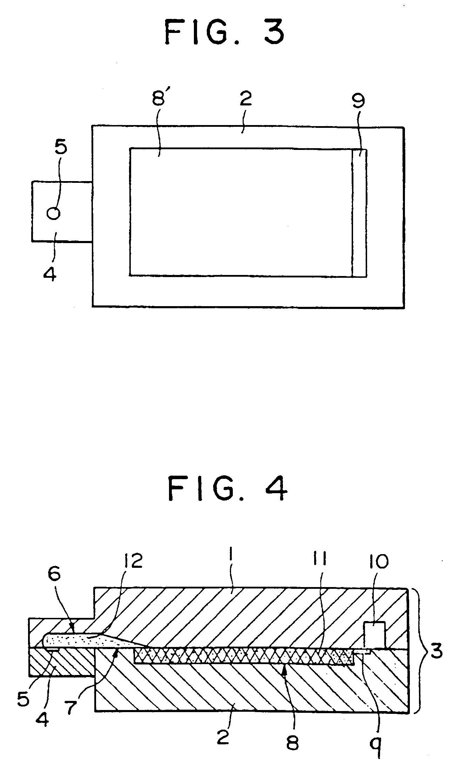

An ordinary practical mode of SRIM is illustrated in Fig. 4. According to this SRIM method, fibre-reinforced resin mouldings are produced in the following way.

A fibre reinforcement 11 is placed in the cavity 8 of a mould 3 consisting of top mould-piece 1 and bottom mould-piece 2. After closing the mould, a liquid resin material 12 is injected into the cavity and cured. After curing has been completed, the mould 3 is opened and the produced moulding is withdrawn therefrom.

Injection of the liquid resin material is performed by impingement-mixing the starting liquid resin materials by a mixing head 4 and then passing the mixed material into the mould cavity 8 through a resin material discharge port 5, a runner 6 and a gate 7 under an injection pressure of usually about 0.5 kg/cm² Gauge. In the inside of the mixing head 4 are provided the circulation paths (not shown) prepared for the respective components of the resin material, and in these circulation paths are disposed the orifices opposite each other. Mixing of the liquid resin materials is accomplished by the instantaneous impingement-mixing of the resin materials when passing through the orifices.

In the mouldings obtained by RIM, it is often practised to blend a foaming agent or other additives or to blow a gas into the resin materials for attaining a reduction of weight of the mouldings or for preventing dimensional shrinkage on curing, thereby making many tiny cells contained in the moulding. Such method is carried out in production of RIM mouldings of polyurethane, polyurea, polyamide and the like.

In the case of the SRIM mouldings, on the other hand, it is usually undesirable for the moulding to contain the cells, because these mouldings, unlike the RIM mouldings, are used mainly for structural materials for which strength and stiffness are important factors. Further, the presence of the cells lowers impregnation of the liquid resin material into the fibre reinforcement and also impairs transparency of the mouldings which reduces their commercial value.

However, in the case of using the conventional method, even if SRIM moulding is carried out without blending any foaming agent, the resulting mouldings tend to contain the cells, due to the presence in the liquid resin material, of vapours of the said resin material and of air in the mould.

The object of the present invention is to provide a process for producing fibre-reinforced resin mouldings having few cells or voids by SRIM.

As a result of extensive studies for attaining the said object, it has been found that by bringing the interior of the mould cavity into which a liquid resin material has been injected, into a pressurized state by introduction of a pressurized gas, in the process for production of fibre-reinforced resin mouldings by SRIM, the number of cells in the mouldings has been remarkably reduced. The present invention has been attained on the basis of this finding.

EP-A-0,294,768, on which the preamble of claim 1 is based, and also EP-A-0,320,302, disclose a process for producing fibre-reinforced resin mouldings, in which gas pressure is applied to the injected resin prior to gelation and maintained until after gelation.

According to the present invention, there is provided a process for producing fibre-reinforced resin mouldings, which comprises the steps of :
positioning a fibre reinforcement in a cavity mould, the mould comprising a cavity having two ends, a liquid-reservoir space and a gate;
introducing a liquid resin material into the cavity, via a mixing head and the gate;
applying an inert gas to the mould cavity at some time before gelation of the liquid resin material, so as to bring the inside of the cavity into a pressurized state, such pressurized state being maintained until completion of curing; and
after curing, removing the moulded product from the mould,
wherein the mould is arranged with the liquid-reservoir space disposed at one of said ends of the cavity and the gate disposed at the other of said ends of the cavity, and
the process further comprises the step of slanting the mould so that the liquid reservoir space is at an upper level and the gate is at a lower level, before introducing the liquid resin material into the cavity, so that when the liquid resin material is introduced into the cavity, it flows upwardly from the gate towards the liquid reservoir space so as to gather cells contained in the liquid resin material in the liquid reservoir space.

Preferred embodiments are disclosed in the dependent claims. In order that the present invention may more readily be understood, the following description of several embodiments of the invention is given merely by way of example with reference to the accompanying drawings, in which:
Fig. 1 is a schematic illustration of an embodiment of practice of SRIM according to the present invention;
Fig. 2 is an underneath plan view of the top mould-piece (1) of the embodiment shown in Fig. 1;
Fig. 3 is a top plan view of the bottom mould-piece (2) of the embodiment shown in Fig. 1;
Fig. 4 is a schematic illustration of a conventional practical embodiment of SRIM.

As for the reinforcing fibre constituting the fibre reinforcement in the present invention, such fibre is not specifically defined and various known fibre types can be used. Examples of the usable fibres include glass fibre, carbon fibre, alumina fibre, boron fibre, silicon fibre, aromatic polyamide fibre, polyester fibre and a mixture thereof. As to the form of the fibre reinforcement, it is usually used in the form of mat, textile or the like, and it may also be used by combining these forms. The length of the files constituting a mat or the like is also not specified in the present invention, but a greater fiber length, is preferred for increasing the mechanical strength.

As the liquid resin material, there can be used in the present invention various known thermosetting or thermoplastic resins which can be molded by a reaction injection molding machine. These starting resins are Generally of a two-pack or three-pack system, and usually the resin material is injected into the cavity after impingement-mixing in the mixing head and is cured in the cavity.

The viscosity of the liquid resin material depends on the mold temperature and mixing ratio, but it is preferable to keep the viscosity of the said resin material as low as possible, specifically 50 mNsm⁻² (50 cp) or less, till the moment when the said resin material is injected into the mold cavity after having been mixed up sufficiently.

The curing rate is preferably so adjusted that it stays low during the time when the resin material is being charged into the mold, but after completion of charging the curing rate rises to complete the curing reaction quickly. Specifically, it is preferred to adjust the curing rate so that the time required for curing is not more than 10 minutes, more preferably not more than 5 minutes, still more preferably not more than 3 minutes.

Preferred examples of the thermosetting resins usable in the present invention are epoxy resin, vinyl ester resin, unsaturated polyester, phenol resin, bismaleimide resin, urethane resin, polyurea, and polyisocyanurate. A thermosetting resin obtained by polymerizing an allyl-, vinyl-, acrylic- or methacrylic-type monomer having carbon-carbon double bonds and a norbornene-type polymerizable monomer or oligomer thereof can be also used favorably. As the thermoplastic resin, there can be used polyamide, polycarbonate and the like.

Each of the said resins takes its form after the resin material has been injected in the form of monomer, prepolymer, etc., into the cavity 8 and cured therein. The monomer, etc., used here may contain suitable additives such as reactive diluent, catalyst, internal release agent, etc.

The process of the present invention is described below.

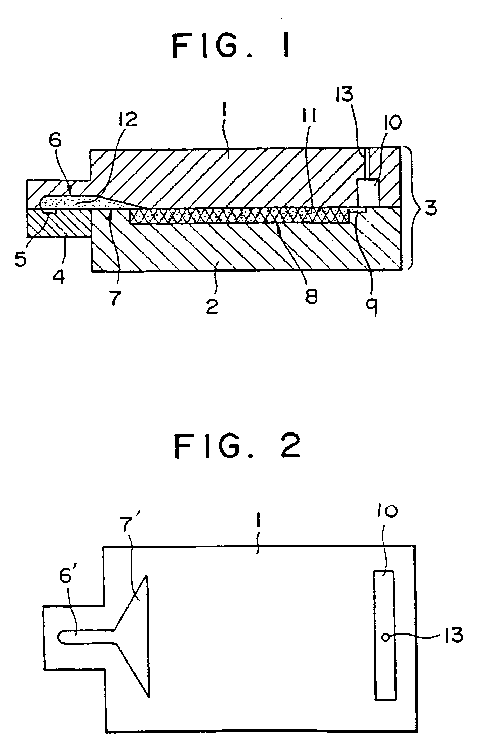

The process for producing fiber-reinforced resin moldings according to the present invention is explained with reference to Figs. 1 to 3.

The reference numerals used in the drawings are as follows:
1 is the top mould piece of the mould, 2 is the bottom mould piece of the mould, 3 is the mold, 4 is the mixing head, 5 is the liquid resin material discharge port, 6 is the runner, 6' is the runner-forming portion, 7 is the gate, 7' is the gate-forming portion, 8 is the cavity, 8' is the cavity-forming portion, 9 is the space connecting cavity (8) and reservoir space (10), 10 is the liquid reservoir space, 11 is the fibre reinforcement, 12 is the liquid resin material, 13 is the passage.

In the embodiment shown in Fig 1 to 3 of the present invention, a fibre reinforcement is placed in the cavity-forming portion 8' and the top mould-piece 1 and the bottom mould piece 2 are joined to close the mould. Then a liquid resin material is injected into the cavity 8 via the mixing head 4, the liquid resin material discharge port 5, the runner 6 and the gate 7. The inside of the cavity 8 is brought into a pressurized state by application of a pressurized gas during the period after completion of injection of the liquid resin material till gelation of the said resin material. This pressurized state is maintained until completion of curing. After curing, the mould is opened and the moulded product is withdrawn from the mould, thereby obtaining a fibre-reinforced resin moulding having few cells and/or voids.

The mould 3 may be either metallic or made of resin. The surface of the cavity 8 is preferably finished beforehand to high smoothness by polishing or other means. This is important for improving surface smoothness and mould release characteristics of the mouldings. The mould temperature may be properly selected according to the curing temperature of the liquid resin material.

In Figs. 1 to 3 showing an embodiment of the present invention, when the liquid resin material is injected into the cavity, the resin material is preferably injected from the lower part thereof and allowed to run upwardly. The mixing head 4 of the mould is a head for side gate injection and mounted to the side of the bottom mould-piece 2. The liquid resin material discharge port 5 is positioned at the parting surface of the top mould-piece 1 and the mixing head 4. According to this type of mixing head, the liquid resin material which has been mixed through impingement while passing through the orifices in the circulation paths in the mixing head is forced to flow upwardly, discharged out from the liquid resin material discharge port 5, and supplied into the runner 6. The resin material at this point is indicated by numeral 12. As the liquid resin material is injected from a lower port and allowed to run upwardly, the cells and vapours contained in the liquid resin material tend to gather in the upper portion in the cavity and liquid reservoir space, and consequently the cells which are liable to cause improper (incompleted) impregnation by the liquid resin material, can be effectively reduced by the action of a pressurized gas.

The method of injection may be the one which is conventionally used in reaction injection moulding. The operating conditions such as temperature, pressure, etc., may be properly selected in consideration of the properties of the liquid resin material used, performance required for the moulding, and other factors. The injection amount is decided by considering the volume of the moulding to be formed, its fibre content, and other factors.

In the embodiment of Figs. 1 to 3, it is preferable to use a movable mould and to slant the mould properly so that the liquid reservoir space 10 is at the upper end and the gate is positioned at a lower level. Such slanting of the mould causes the cells to gather in the upper section of the cavity or liquid reservoir space and enhances the cell-reducing effect by the pressurized gas described later. It is preferred that the angle of slant of the mould may be appropriately selected within the range of 15° to 90°.

In the present invention, the inside of the cavity is brought into a pressurized state by application of a pressurized gas during the period after completion of injection of the liquid resin material and up till gelation of the liquid resin material, and such a pressurized state is maintained until completion of curing. Such a pressurized state in the cavity allows reduction of the size and/or number of cells contained in the moulding (liquid resin material and fibre reinforcement in the cavity) before it is cured, and consequently the liquid resin material moves into the spaces vacated by the cells, thereby preventing generation of portions where the fibre reinforcement 11 has not been impregnated.

A reason why the size and/or number of cells contained in the moulding is decreased by the pressurized state is not clear, but this phenomenon is considered attributable to such factors as compression of the cells, their volumetric shrinkage, and their dissolution into the liquid resin material, which are induced under the action of pressurization.

As to the pressurized gas, inert gases are not specifically defined, so various (inert) gases which will not induce a chemical reaction with fibre reinforcement or liquid resin material, can be used. As examples of usable inert gas, air, nitrogen or the like is preferably used. The method of bringing the inside of the cavity into a pressurized state in the embodiment shown in Figs. 1 to 3 is to introduce an inert gas into the runner 6 and the gate 7. However, introduction of an inert gas into the liquid reservoir space 10 through a passage 13 is a preferable method.

In principle the higher degree of pressurization the better, but actually due to the operational restrictions of the apparatus such as injecting pressure of the liquid resin material injector, clamping force of the clamping device, etc. the degree of pressurization applied in the present invention is usually in the range of 1 to 20 kg/cm² Gauge, preferably 2 to 10 kg/cm² Gauge, more preferably 3 to 7 kg/cm² Gauge.

A pressurized state may be brought about at any time during the period after completion of injection of the liquid resin material up till gelation of the liquid resin material, but it is preferred to pressurize immediately after completion of injection when the viscosity of the liquid resin material is still low. Pressurization may be begun concurrently with the start of injection or during injection of the liquid resin material, but in this case, since the pressure due to flow pressure loss of the resin is given in addition to the pressure of the pressurized gas around the gate 7 in the mold 3, it is necessary to make some allowance for the injection pressure and the clamping force between the upper and lower mould pieces.

According to the process of the present invention, it is possible to easily produce mouldings containing few cells therein, having an excellent state of impregnation of the liquid resin material into the fiber reinforcement, and being substantially free of craters due to the cells in the surface.

### EXAMPLES

The present invention will be further illustrated below with reference to the examples. It is to be understood, however, that the present invention is in no way limited by these examples but may be embodied otherwise without departing from the scope of the invention.

In the following examples, there were used the mould designs and the materials specified below.

### (1) Mold in Fig. 1

A metal mould having a platen with a size of 1,020 mm x 510 mm and a cavity of 3 mm in depth was used. The mould was provided with a gate at one end of the cavity and a liquid reservoir space at the other end of the cavity.

### (2) Mold in Fig. 4

A metal mould having a platen with a size of 1,020 mm x 510 mm and a cavity of 3 mm in depth was used. The mold was provided with a liquid resin material discharge port at center of an upper surface of the cavity and a liquid reservoir space at both ends of the cavity.

### (2) Liquid resin materials

There were used the following types A and B.
A 50:50 (by weight) mixture of bisphenol F-type glycidyl ether and glycidyl methacrylate (SY Monomer G, produced by Sakamoto Yakuhin Co., Ltd.) was used for composition A.
A 106:5:1 (by weight) mixture of methyltetrahydrophthalic anhydride, 2-ethyl-4-methylimidazole and 1,1-bis(tert-butylperoxy)-3,3,5-trimethylcyclohexane (PERHEXA 3M, produced by Nippon Yushi) was used in composition B.

### (3) Fiber reinforcement

A 1,015 x 505 mm glass-fiber mat with a unit weight of 1,800 g/m².

### EXAMPLE 1 (Figs. 1 to 3)

The fiber reinforcement was placed in the cavity, and the top and bottom mould pieces were clamped with a clamping force of about 70 tons. The mould temperature was kept at 120°C for both top and bottom mould pieces.

The mold was slanted at an angle of about 80° to the horizontal with the gate side lowermost. Then the resin materials A and B were mixed through impingement by a mixing head in an epoxy equivalent ratio of 10:8, and the mixed material was immediately injected into the cavity. The injection amount of the liquid resin material has been previously determined so that the liquid level would reach substantially the middle of the liquid reservoir space.

When injection of the liquid resin material was completed, the pressure of the air phase in the liquid reservoir space has reached about 0.5 kg/cm² G. Pressurized air was immediately introduced into the liquid reservoir space to adjust the pressure in the cavity to 3 kg/cm² G. The cavity was maintained under this pressure until curing was completed. After curing of the liquid resin material was completed, the mould was opened and the moulded product was withdrawn therefrom.

The moulded product thus obtained had a very excellent state of impregnation of the liquid resin material into the fib re reinforcement and presented high transparency although it contained about 25% by volume of fibre reinforcement.

### COMPARATIVE EXAMPLE 1 (Fig. 4)

The procedure of Example 1 was followed except that introduction of pressurized air was omitted.

The resulting moulded product included many cells of various sizes and assumed a generally milk-white vague colour. The resin-impregnated solidified glass fibers were seen exposed at some parts of the surface.

## Claims

1. A process for producing fibre-reinforced resin mouldings, which comprises the steps of :
positioning a fibre reinforcement (11) in a cavity mould (3), the mould (3) comprising a cavity (8) having two ends, a liquid-reservoir space (10) and a gate (7);
introducing a liquid resin material into the cavity (8), via a mixing head (4) and the gate (7);
applying an inert gas to the mould cavity (8) at some time before gelation of the liquid resin material, so as to bring the inside of the cavity (8) into a pressurized state, such pressurized state being maintained until completion of curing; and
after curing, removing the moulded product from the mould (3),
characterised in that the mould (3) is arranged with the liquid-reservoir space (10) disposed at one of said ends of the cavity (8) and the gate (7) disposed at the other of said ends of the cavity (8), and
the process further comprises the step of slanting the mould (3) so that the liquid reservoir space (10) is at an upper level and the gate (7) is at a lower level, before introducing the liquid resin material into the cavity (8), so that when the liquid resin material is introduced into the cavity (8) it flows upwardly from the gate (7) towards the liquid reservoir space (10) so as to gather cells contained in the liquid resin material in the liquid reservoir space (10).

2. A process according to claim 1, wherein said inert gas is applied through said liquid reservoir space (10).

3. A process according to claim 1 or 2, wherein the fibre reinforcement is at least one selected from the group consisting of glass fibre, carbon fibre, alumina fibre, boron fibre, silicon fibre, aromatic polyamide fibre and polyester fibre.

4. A process according to any preceding claim, wherein the viscosity of the liquid resin material when injected is not more than 50 mNsm⁻².

5. A process according to any preceding claim, wherein the liquid resin material is one selected from the group consisting of epoxy resin; vinyl ester resin; unsaturated polyester; phenol resin; bismaleimide resin; urethane resin; polyisocyanurate; thermosetting resin composed of an allyl-, vinyl-, acrylic- or methacrylic-type monomer having carbon-carbon double bonds and a norbornene-type polymerizable monomer or oligomer; polyamide; and polycarbonate.

6. A process according to any preceding claim, wherein the inert gas is air or nitrogen.

7. A process according to any preceding claim, wherein the pressurized state is under a pressure of 1-20 kg/cm² Gauge.

8. A process according to any preceding claim, wherein the mould further comprises a runner (6) communicating with the gate (7) and a liquid resin material discharge port (5) communicating with the runner (6), and wherein the liquid resin method is introduced into the cavity via the mixing head (4), the liquid resin material discharge port (5), the runner (6) and the gate (7).

## Patentansprüche

1. Verfahren zum Herstellen faserverstärkter Harzformkörper, das die folgenden Schritte aufweist:
Einlegen einer Faserverstärkung (11) in eine Hohlform (3), wobei die Form (3) einen Hohlraum (8) mit zwei Enden, einen Flüssigkeits-Vorratsraum (10) und einen Einguß (7) aufweist;
Einleiten eines flüssigen Harzmaterials in den Hohlraum (8), über einen Mischkopf (4) und den Einguß (7);
Einleiten eines Inertgases in den Formhohlraum (8) irgendwann vor der Gelierung des flüssigen Harzmaterials, um die Innenseite des Hohlraums (8) in einen druckbeaufschlagten Zustand zu versetzen, wobei ein solcher druckbeaufschlagter Zustand bis zur Fertigstellung des Aushärtens aufrechterhalten wird; und
Entfernen des abgeformten Erzeugnisses aus der Form (3) nach der Aushärtung,
dadurch **gekennzeichnet,** daß die Form (3) so ausgebildet ist, daß sich der Flüssigkeits-Vorratsraum (10) am einen der genannten Enden des Hohlraums (8) und der Einguß (7) am anderen der genannten Enden des Hohlraums (8) befindet, und
daß das Verfahren ferner den Schritt aufweist, die Form (3) so zu neigen, daß der Flüssigkeits-Vorratsraum (10) sich bei einem oberen Niveau und der Einguß (7) bei einem unteren Niveau befindet, bevor man das flüssige Harzmaterial in den Hohlraum (8) einleitet, so daß, wenn das flüssige Harzmaterial in den Hohlraum (8) eingeleitet ist, es vom Einguß (7) nach oben zum Flüssigkeits-Vorratsraum (10) strömt, um Zellen, die im flüssigen Harzmaterial enthalten sind, im Flüssigkeits-Vorratsraum (10) anzusammeln.

2. Verfahren nach Anspruch 1, worin das genannte Inertgas durch den genannten Flüssigkeits-Vorratsraum (10) hindurch eingeleitet wird.

3. Verfahren nach Anspruch 1 oder 2, worin die Faserverstärkung mindestens eine solche ist, die aus der Gruppe ausgewählt ist, die aus Glasfasern, Kohlenstoffasern, Aluminiumoxidfasern, Borfasern, Siliciumfasern, aromatischen Polyamidfasern und Polyesterfasern besteht.

4. Verfahren nach irgendeinem vorangehenden Anspruch, worin die Viskosität des flüssigen Harzmaterials, wenn es eingespritzt wird, nicht größer ist als 50 mNsm⁻².

5. Verfahren nach irgendeinem vorangehenden Anspruch, worin das flüssige Harzmaterial ein solches ist, das aus der Gruppe ausgewählt ist, die aus Epoxyharz, Vinylesterharz, ungesättigtem Polyester, Phenolharz, Bismaleimidharz, Urethanharz, Polyisocyanurat, wärmehärtbarem Harz, das aus einem Allyl-, Vinyl-, Acryl- oder Methacryl-artigen Monomeren zusammengesetzt ist, das Kohlenstoff-Kohlenstoff-Doppelbindungen aufweist, und einem Norbornen-artigen, polymerisierbaren Monomeren oder Oligomeren, Polyamid und Polycarbonat besteht.

6. Verfahren nach irgendeinem vorangehenden Anspruch, worin das Inertgas Luft oder Stickstoff ist.

7. Verfahren nach irgendeinem vorangehenden Anspruch, worin der Druckzustand unter einem Druck von 1 bis 20 kg/cm² Gauge erfolgt.

8. Verfahren nach irgendeinem vorangehenden Anspruch, worin die Form ferner einen Lauf (6) aufweist, der mit dem Einguß (7) in Verbindung steht, und eine Abgabeöffnung (5) für flüssiges Harzmaterial, die mit dem Lauf (6) in Verbindung steht, und worin das flüssige Harzmaterial in den Hohlraum über den Mischkopf (4), die Abgabeöffnung (5) für flüssiges Harzmaterial, den Lauf (6) und den Einguß (7) eingeleitet wird.

## Revendications

1. Procédé pour la fabrication d'articles moulés faits de résine renforcée par des fibres, qui comprend les étapes consistant à :
placer un renfort fibreux (11) dans la cavité d'un moule (3), le moule (3) comprenant une cavité (8) ayant deux extrémités, un espace constituant un réservoir de liquide (10) et une entrée (7) ;
introduire une résine liquide dans la cavité (8), via une tête de mélange (4) et l'entrée (7) ;
appliquer un gaz inerte à la cavité (8) du moule en un moment précédant la gélification de la résine liquide, de façon à mettre en pression l'intérieur de la cavité (8), cette mise en pression étant maintenue jusqu'à l'achèvement du durcissement ; et
après le durcissement, retirer le produit moulé du moule (3),
caractérisé en ce que le moule (3) comporte l'espace constituant un réservoir de liquide (10) disposé à une desdites extrémités de la cavité (8) et l'entrée (7) disposée à l'autre de ces extrémités de la cavité (8), et
le procédé comprend de plus l'étape consistant à incliner le moule (3) pour que l'espace constituant un réservoir de liquide (10) soit à un niveau supérieur et l'entrée (7) soit à un niveau inférieur, avant l'introduction de la résine liquide dans la cavité (8), si bien que, lorsque la résine liquide est introduite dans la cavité (8), elle s'élève de l'entrée (7) vers l'espace constituant un réservoir de liquide (10) afin de rassembler les cellules contenues dans la résine liquide dans l'espace constituant un réservoir de liquide (10).

2. Procédé selon la revendication 1, dans lequel ledit gaz inerte est appliqué via ledit espace constituant un réservoir de liquide (10).

3. Procédé selon la revendication 1 ou 2, où le renfort fibreux est choisi parmi au moins un de ceux constitués par des fibres de verre, des fibres de carbone, des fibres d'alumine, des fibres de bore, des fibres de silicium, des fibres de polyamide aromatique et des fibres de polyester.

4. Procédé selon l'une quelconque des revendications précédentes où la viscosité de la résine liquide, lorsqu'elle est injectée, ne dépasse pas 50 mN.s.m⁻².

5. Procédé selon l'une quelconque des revendications précédentes, où la résine liquide est choisie dans le groupe constitué par une résine époxyde ; une résine d'ester vinylique ; un polyester insaturé ; une résine phénolique ; une résine de bismaléimide ; une résine uréthannique ; un polyisocyanurate ; une résine thermodurcissable composée d'un monomère allylique, vinylique, acrylique ou méthacrylique ayant des doubles liaisons carbone-carbone et d'un monomère ou oligomère polymérisable de type norbornène ; un polyamide et un polycarbonate.

6. Procédé selon l'une quelconque des revendications précédentes, où le gaz inerte est l'air ou l'azote.

7. Procédé selon l'une quelconque des revendications précédentes, où la pression manométrique de l'état de mise sous pression est de 1 à 20 kg/cm².

8. Procédé selon l'une quelconque des revendications précédentes, où le moule comprend de plus un canal (6) communiquant avec l'entrée (7) et un orifice de décharge (5) de résine liquide communiquant avec le canal (6), et où la résine liquide est introduite dans la cavité via la tête de mélange (4), l'orifice de décharge (5) de résine liquide, le canal (6) et l'entrée (7).
